# EUROPEAN PATENT APPLICATION

(11) **EP 4 216 323 A1**
(43) Date of publication of application: **26.07.2023**
(21) Application number: 21869470.1
(22) Date of filing: 17.09.2021
(51) Int. Cl.: H01M 10/04, H01M 50/533

(54) **POWER STORAGE DEVICE**

(30) Priority: 21.09.2020 US 202063081142 P
(71) Applicant: Panasonic Intellectual Property Management Co., Ltd., Osaka-shi, Osaka 540-6207 (JP)
(72) Inventor: GESHI Shinya, Osaka-shi, Osaka 540-6207 (JP); SAKAMOTO Shinichi, Osaka-shi, Osaka 540-6207 (JP); SHIMIZU Kazumichi, Osaka-shi, Osaka 540-6207 (JP); KOZUKI Kiyomi, Osaka-shi, Osaka 540-6207 (JP); KOHIRA Kazutoshi, Osaka-shi, Osaka 540-6207 (JP)
(74) Representative: Novagraaf International SA
(86) International application number: PCT/JP2021/034415
(87) International publication number: WO 2022/059788

(57) **Abstract**

A power storage device 10 includes a first electrode 30 having a strip first current collector 31 and a first active material layer 33 carried on the first current collector 31, a second electrode 40 having a strip second current collector 41 and a second active material layer 43 carried on the second current collector 41, and a separator 50 interposed between the first electrode 30 and the second electrode 40. The first electrode 30, the second electrode 40, and the separator 50 form a columnar wound body 20. The first current collector 31 has a plurality of first tabs 34 electrically connected to one end along the longitudinal direction of the first current collector 31 and extending radially inward of the wound body 20. The first tab 34 has a proximal end portion connected to the first current collector 31, and a first wide portion 35 wider than the proximal end portion. The plurality of first tabs 34 are overlapped and welded to each other at their first wide portions 35. This allows the plurality of first tabs 34 to be easily welded.

## Description

### TECHNICAL FIELD

The present disclosure relates to a power storage device.

### BACKGROUND ART

Conventionally, a power storage device that stores electricity is known (e.g., Patent Literature 1). The power storage device of Patent Literature 1 is a secondary battery including an electrode having a current collector and an active material carried thereon, and a plurality of tabs extending from the current collector of the electrode. In the embodiment shown in FIG. 8 of Patent Literature 1, the plurality of tabs are folded so as to overlap each other, and then welded to a can member in the overlapped state.

### Citation List

### Patent Document

Patent Literature 1: Japanese Translation of PCT International Application Publication No. 2020-505717

### SUMMARY OF THE INVENTION

### PROBLEM TO BE SOLVED BY THE INVENTION

However, the region where the plurality of tabs overlap with each other (hereinafter, also referred to as an overlapping region) becomes small when the folding direction of the tabs is not in line with the design. The overlapping region is a region to be welded, and therefore when the region is small, it may cause a trouble to the welding step. Under such circumstances, the present disclosure aims, as one of the purposes, to weld the plurality of tabs of the electrode easily.

### MEANS FOR SOLVING THE PROBLEM

An aspect of the present disclosure relates to a power storage device. The power storage device includes a first electrode having a strip first current collector, and a first active material layer carried on the first current collector; a second electrode having a strip second current collector, and a second active material layer carried on the second current collector; and a separator interposed between the first electrode and the second electrode, wherein the first electrode, the second electrode, and the separator form a columnar wound body, and the first current collector has a plurality of first tabs electrically connected to one end along the longitudinal direction of the first current collector and extending radially inward of the wound body, the first tab has a proximal end portion connected to the first current collector and a first wide portion wider than the proximal end portion, and the plurality of first tabs are overlapped and welded with each other at their respective first wide portions.

### Effects of the Invention

With the present disclosure, plurality of tabs of electrodes can be easily welded.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a perspective view illustrating an appearance of a wound body included in a power storage device of embodiment 1.
[FIG. 2] FIG. 2 is a plan view illustrating a configuration of a negative electrode.
[FIG. 3] FIG. 3 is a plan view illustrating a configuration of a positive electrode.
[FIG. 4] FIG. 4 shows a plurality of tabs folded so as to cover an end face of the wound body, seen in an axis direction of the wound body.
[FIG. 5] FIG. 5 shows a current collecting plate disposed at an end face of the wound body, seen in the axis direction of the wound body.
[FIG. 6] FIG. 6 is a vertical cross sectional view illustrating a configuration of the power storage device of embodiment 1.
[FIG. 7] FIG. 7 is a plan view illustrating a configuration of an electrode of embodiment 2.
[FIG. 8] FIG. 8 is a plan view illustrating a configuration of an electrode of embodiment 3.

### DESCRIPTION OF THE EMBODIMENTS

Embodiments of the power storage device of the present disclosure are described below with examples. However, the present disclosure is not limited to the examples below. In the description below, specific numeral values and materials are given as examples, but other numeral values and materials can be used as long as effects of the present disclosure can be achieved.

A power storage device of the present disclosure includes a strip first electrode, a strip second electrode, and a separator interposed between the first electrode and second electrode. The first electrode, second electrode, and separator form a columnar wound body. That is, the first electrode and second electrode are wound with the separator interposed therebetween.

The first electrode has a strip first current collector, and a first active material layer carried on the first current collector. The second electrode has a strip second current collector, and a second active material layer carried on the second current collector.

The first current collector has a plurality of first tabs electrically connected to one end along the longitudinal direction thereof and extending radially inward of the wound body. The first tab has a proximal end portion connected to the first current collector, and a first wide portion wider than the proximal end portion. The plurality of first tabs are overlapped and welded to each other at the first wide portion. The welding may be, for example, electric resistance welding or laser welding. The first tab may be a different unit from the first current collector, and may be joined with the first current collector.

The plurality of first tabs overlap at the first wide portion wider than the proximal end portion, and this forms a large overlapping region. The size of the overlapping region is the maximum when the direction where the first tab extends coincides with the radial direction of the wound body, but even when the direction where the first tab extends does not really coincide with the radial direction of the wound body, the size is sufficiently large. Thus, welding at the overlapping region, that is, welding the plurality of first tabs of the first electrode can be easily performed.

The first wide portion may be disposed at the distal end portion of the first tab. In this case, the length of the first tabs can be set to a minimum length necessary for overlapping with other first tabs. Thus, the amount of the materials used for forming the first tab can be suppressed. The first wide portion may be disposed between the proximal end portion and the distal end portion of the first tab.

The shape of the first tab may match the shape of the gap (cutout) between two adjacent first tabs when the first current collector is unfolded. The first current collector having a plurality of first tabs with such a shape can be made two out of one sheet material by cutting, generally without wasting any portion. Thus, the first current collector material can be effectively used. This is especially effective when cutting out a plurality of first electrodes from one rolled sheet of electrode plate. When cutting out the first tabs from the rolled sheet, in which a plurality of first active material layers are formed in stripes in the longitudinal direction of the rolled sheet and unapplied portions are formed between a pair of adjacent first active material layers, the first tabs of the first electrode having the first active material layer can be cut out from the unapplied portion.

The first wide portion is a portion continuously widened toward the distal end portion side from the proximal end portion side of the first tab. Alternatively, the first wide portion may be a portion widened stepwise toward the distal end portion side from the proximal end portion side of the first tab. That is, it may be formed so that the end edge of the proximal end portion crosses the end edge of the distal end portion at a predetermined angle. The proximal end portion may be a strip, and when it is the proximal end portion only, the proximal end portion width may be tapered as it approaches the distal end portion. The distal end portion may be configured to extend to both sides in the width direction. This configuration allows for the first wide portion to easily overlap with the first wide portion of other first tabs.

The power storage device may further include a first current collecting plate welded to the plurality of first tabs and electrically connected to the first current collector. The power storage device may not include such a first current collecting plate.

The first wide portion may extend to both sides in the width direction of the first tab. This configuration allows for the first wide portion to easily overlap with the first wide portion of other first tabs.

The plurality of first tabs may extend from positions on straight lines radially extending and different from each other, seeing the end face of the wound body in a winding axis direction. This configuration allows for current collecting from various positions of the first electrode, and the current collecting path in the first electrode can be shortened easily. The plurality of first tabs extending in such a disposition do not overlap with each other easily particularly. Therefore, the effects of the first wide portion being wider than the proximal end portion are easily obtained.

Preferably, at the plurality of overlapping first wide portions, all of the first wide portions are overlapped at one point and joined by one welding mark. However, all of the plurality of first wide portions do not necessarily have to overlap at one point, and they may be joined at a plurality of points.

The second current collector may have a plurality of second tabs extending inward in a radial direction of the wound body from one end portion along the longitudinal direction thereof. The second tab may have a second wide portion wider than its proximal end portion. The plurality of second tabs may be overlapped and welded to each other at the second wide portion.

The second wide portion may be disposed at the distal end portion of the second tab. In this case, the length of the second tabs can be set to a minimum length necessary for overlapping with other second tabs. Thus, the amount of the materials used for forming the second tab can be suppressed. The second wide portion may be disposed between the proximal end portion and the distal end portion of the second tab.

The shape of the second tab may match the shape of the gap between two adjacent second tabs when the second current collector is unfolded. The second current collector having a plurality of second tabs with such a shape can be made two out of one sheet material by cutting, generally without wasting any portion. Thus, the second current collector material can be effectively used. This is especially effective when cutting out a plurality of second electrodes from one rolled sheet of electrode plate. When cutting out the second tabs from the rolled sheet, in which a plurality of second active material layers are formed in stripes in the longitudinal direction of the rolled sheet and unapplied portions are formed between a pair of adjacent second active material layers, the second tab of the second electrode having the second active material layer can be cut out from the unapplied portion.

The second wide portion may be a portion continuously widened toward the distal end portion side from the proximal end portion side of the second tab. Alternatively, the second wide portion may be a portion widened stepwise toward the distal end portion side from the proximal end portion side of the second tab. That is, it may be formed so that the end edge of the proximal end portion crosses the end edge of the distal end portion at a predetermined angle. The proximal end portion may be a strip, and when it is the proximal end portion only, the proximal end portion width may be tapered as it approaches the distal end portion. The distal end portion may be configured to extend to both sides in the width direction. This configuration allows for the second wide portion to easily overlap with the second wide portion of other second tabs.

The power storage device may further include a second current collecting plate welded to the plurality of second tabs and electrically connected to the second current collector. The power storage device may not include such a second current collecting plate.

The plurality of first tabs may be disposed at one side in the axis direction of the wound body, while the plurality of second tabs may be disposed at the other side in the axis direction of the wound body.

The power storage device may be, for example, a non-aqueous electrolyte secondary battery, alkaline storage battery, or capacitor. The non-aqueous electrolyte secondary battery includes a lithium ion secondary battery, solid-state battery, and the like. In this case, one of the first electrode and second electrode is a positive electrode, and the other is a negative electrode. One of the first current collector and second current collector is a positive electrode current collector configured with, for example, aluminum or aluminum alloy, and the other is a negative electrode current collector configured with, for example, copper or copper alloy.

As described, the present disclosure allows for the plurality of first tabs of the first electrode to be easily welded. Furthermore, the present disclosure allows for the materials of the current collectors to be effectively used.

In the following, an example of the power storage device of the present disclosure is described in detail with reference to the drawings. For the elements in an example of the power storage device described below, the above-described elements can be used. The elements of the example of the power storage device described below can be changed based on the description above. The matters described below can also be applied to the above-described embodiment. Of the elements in the example of the power storage device described below, elements that are not essential to the power storage device of the present disclosure can be omitted. The figures shown below are schematic, and do not accurately represent shapes and numbers of actual members.

### « Embodiment 1 »

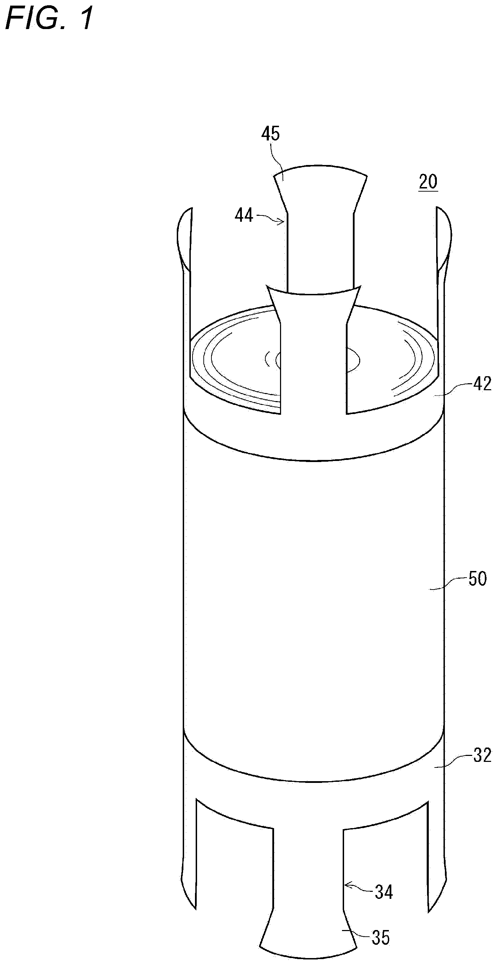

Embodiment 1 of the present disclosure is described. A power storage device 10 of this embodiment is a lithium ion secondary battery, without limitation. As shown in FIG. 1 to FIG. 5, the power storage device 10 includes a strip negative electrode 30, a strip positive electrode 40, a separator 50 interposed between the negative electrode 30 and positive electrode 40, a negative electrode current collecting plate 61, and a positive electrode current collecting plate 62. The negative electrode 30, positive electrode 40, and separator 50 form a columnar wound body 20 (ref: FIG. 1).

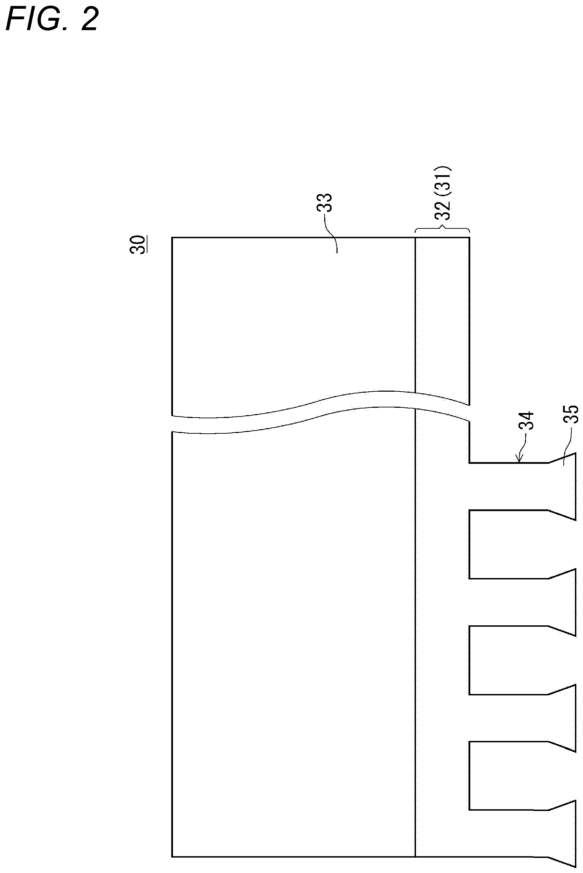

The negative electrode 30 is a strip, and includes, as shown in FIG. 2, a negative electrode current collector 31 and a negative electrode active material layer 33 carried thereon. The negative electrode active material layer 33 is formed on both sides of the negative electrode current collector 31. However, a negative electrode current collector exposed portion 32 not covered with the negative electrode active material layer 33 is formed at one end portion along the longitudinal direction of the negative electrode current collector 31. In the negative electrode current collector 31, the exposed portion may be formed at a position other than the above-described negative electrode current collector exposed portion 32. In the negative electrode current collector exposed portion 32, the negative electrode current collector exposed portion 32 not formed with the negative electrode active material layer will suffice, and a portion of the negative electrode current collector 31 is not necessarily exposed. Another conductive material formed on the negative electrode current collector 31 and different from the negative electrode current collector 31 may be exposed. Four negative electrode current collecting tabs 34 extend from a portion corresponding to the outermost periphery of the negative electrode current collector exposed portion 32. The negative electrode current collecting tabs 34 and negative electrode current collector exposed portion 32 are cut out integrally from a sheet metal material along with the negative electrode current collector 31. The negative electrode 30 is an example of the first electrode. The negative electrode current collector 31 is an example of the first current collector. The negative electrode active material layer 33 is an example of the first active material layer. The negative electrode current collecting tab 34 is an example of the first tab.

The negative electrode current collecting tab 34 has a negative electrode wide portion 35 wider than its proximal end portion. The negative electrode wide portion 35 is disposed at a distal end portion of the negative electrode current collecting tab 34. The negative electrode wide portion 35 is continuously widened toward the distal end portion side from the proximal end portion side of the negative electrode current collecting tab 34. The negative electrode wide portion 35 is an example of the first wide portion.

The maximum width of the negative electrode wide portion 35 may be, for example, 1.1 times or more and 3.5 times or less, or 1.3 times or more and 2.5 times or less of the proximal end portion width of the negative electrode current collecting tab 34. The maximum width of the negative electrode wide portion 35 is, for example, 2.5 mm or more and 10.5 mm or less.

For the negative electrode current collector 31, a sheet metal material is used. The sheet metal material may be metal foil, metal porous body, and the like. Examples of the metal material include copper, copper alloy, nickel, and stainless steel. The negative electrode current collector 31 has a thickness of, for example, 10 µm or more and 100 µm or less.

The negative electrode active material layer 33 includes, for example, a negative electrode active material, a conductive agent, and a binder. The negative electrode active material layer 33 is produced by, for example, applying a negative electrode mixture slurry containing a negative electrode active material, conductive agent, and binder onto both sides of the negative electrode current collector 31, drying the applied coating, and then rolling. The negative electrode active material is a material that stores and releases lithium ions. Examples of the negative electrode active material include a carbon material, metal compound, alloy, and ceramic material.

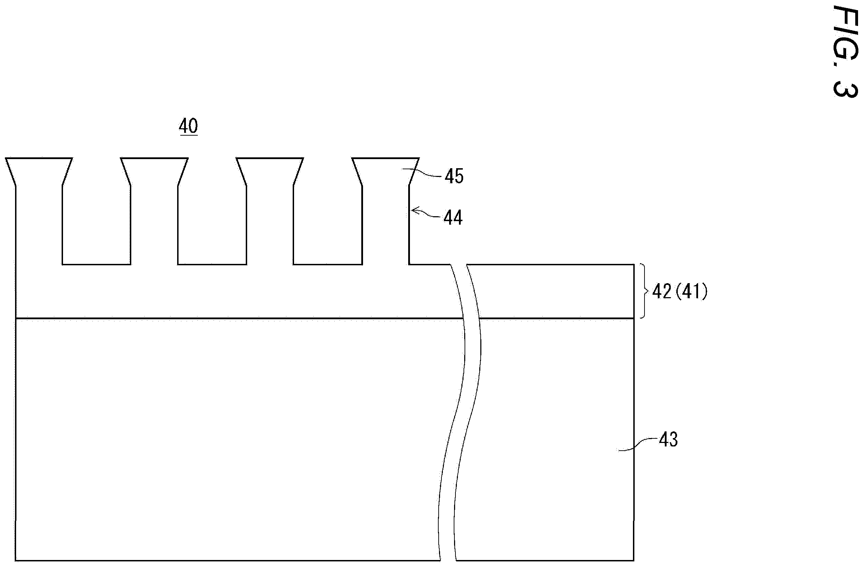

The positive electrode 40 is a strip, and includes, as shown in FIG. 3, a positive electrode current collector 41 and a positive electrode active material layer 43 carried thereon. The positive electrode active material layer 43 is formed on both sides of the positive electrode current collector 41. However, a positive electrode current collector exposed portion 42 not covered with the positive electrode active material layer 43 is formed at one end portion along the longitudinal direction of the positive electrode current collector 41. In the positive electrode current collector 41, the exposed portion may be formed at a position other than the above-described positive electrode current collector exposed portion 42. In the positive electrode current collector exposed portion 42, the positive electrode current collector exposed portion 42 not formed with the positive electrode active material layer will suffice, and a portion of the positive electrode current collector 41 is not necessarily exposed. Another conductive material different from the positive electrode current collector 41 formed on the positive electrode current collector 41 may be exposed. Four positive electrode current collecting tabs 44 are extended from a portion corresponding to the outermost periphery of the positive electrode current collector exposed portion 42. The positive electrode current collecting tab 44 and positive electrode current collector exposed portion 42 are cut out integrally from a sheet metal material along with the positive electrode current collector 41. The positive electrode 40 is an example of the second electrode. The positive electrode current collector 41 is an example of the second current collector. The positive electrode active material layer 43 is an example of the second active material layer. The positive electrode current collecting tab 44 is an example of the second tab.

The positive electrode current collecting tab 44 has a positive electrode wide portion 45 wider than its proximal end portion. The positive electrode wide portion 45 is disposed at a distal end portion of the positive electrode current collecting tab 44. The positive electrode wide portion 45 is continuously widened toward the distal end portion side from the proximal end portion side of the positive electrode current collecting tab 44. The positive electrode wide portion 45 is an example of the second wide portion.

The maximum width of the positive electrode wide portion 45 may be, for example, 1.1 times or more and 3.5 times or less, or 1.3 times or more and 2.5 times or less of the proximal end portion width of the positive electrode current collecting tab 44. The maximum width of the positive electrode wide portion 45 is, for example, 2.5 mm or more and 10.5 mm or less.

For the positive electrode current collector 41, a sheet metal material is used. The sheet metal material may be a metal foil, metal porous body, and the like. Examples of the metal material include aluminum, aluminum alloy, nickel, and titanium. The positive electrode current collector 41 has a thickness of, for example, 10 µm or more and 100 µm or less.

The positive electrode active material layer 43 includes, for example, a positive electrode active material, conductive agent, and binder. The positive electrode active material layer 43 is produced by, for example, applying a positive electrode mixture slurry containing a positive electrode active material, conductive agent, and binder onto both sides of the positive electrode current collector 41, drying the applied coating, and then rolling. The positive electrode active material is a material that stores and releases lithium ions. Examples of the positive electrode active material include a lithium-containing transition metal oxide, transition metal fluoride, polyanion, fluorinated polyanion, and sulfide of transition metals.

For the separator 50, for example, a microporous film of resin such as polyolefin, woven cloth, nonwoven fabric, and the like may be used. The separator 50 has a thickness of, for example, 10 µm or more and 300 µm or less, preferably 10 µm or more and 40 µm or less.

A wound body 20 of FIG. 1 has a positive electrode 40, a negative electrode 30, and a separator 50 interposed therebetween wound into a column. When winding, positions are adjusted so that the negative electrode current collector exposed portion 32 is projected from one end face of the wound body 20, and the positive electrode current collector exposed portion 42 is projected from the other end face of the wound body 20. The separator 50 is wound around the outermost periphery of the wound body 20. FIG. 1 shows a state before the negative electrode current collecting tab 34 and positive electrode current collecting tab 44 are folded.

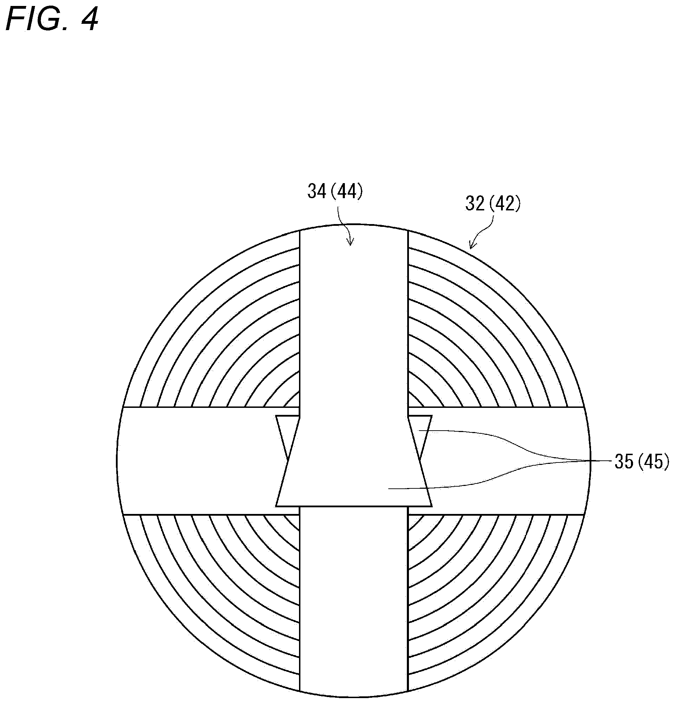

As shown in FIG. 4, the negative electrode current collecting tab 34 or positive electrode current collecting tab 44 is folded so as to cover one end face or the other end face of the wound body 20. Four negative electrode current collecting tabs 34 or four positive electrode current collecting tabs 44 are covering radially inside the negative electrode current collector exposed portion 32 or inside the positive electrode current collector exposed portion 42 (disposed equally at a central angle of 90°). The four negative electrode current collecting tabs 34 or the four positive electrode current collecting tabs 44 are overlapped at their negative electrode wide portions 35 or positive electrode wide portions 45 and welded.

When the negative electrode current collecting tab 34 or positive electrode current collecting tab 44 are folded to the inner track side, the negative electrode current collector exposed portion 32 or positive electrode current collector exposed portion 42 covered with the negative electrode current collecting tab 34 or positive electrode current collecting tab 44 is bent so as to collapse toward the inner track side.

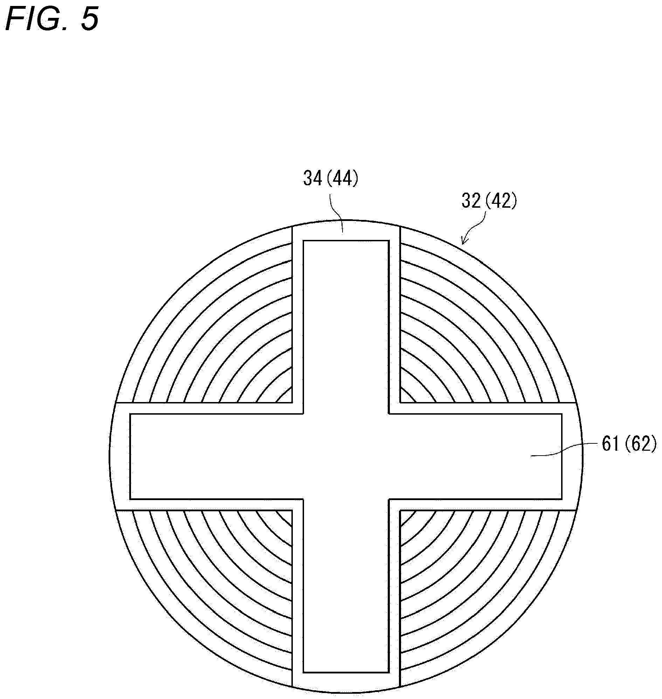

As shown in FIG. 5, the shape of the negative electrode current collecting plate 61 or positive electrode current collecting plate 62 is a cross like shape in line with the shape of the negative electrode current collecting tab 34 or positive electrode current collecting tab 44. However, the shape of the negative electrode current collecting plate 61 and positive electrode current collecting plate 62 is not particularly limited. The negative electrode current collecting plate 61 is welded to the negative electrode current collecting tab 34, and is electrically connected to the negative electrode current collector 31. The positive electrode current collecting plate 62 is welded to the positive electrode current collecting tab 44, and is electrically connected to the positive electrode current collector 41. The negative electrode current collecting plate 61 is an example of the first current collecting plate. The positive electrode current collecting plate 62 is an example of the second current collecting plate.

The material of the negative electrode current collecting plate 61 is, for example, copper, copper alloy, nickel, stainless steel, or the like. The material of the negative electrode current collecting plate 61 may be the same as that of the negative electrode current collector 31. The material of the positive electrode current collecting plate 62 is, for example, aluminum, aluminum alloy, nickel, titanium, and the like. The material of the positive electrode current collecting plate 62 may be the same as that of the positive electrode current collector 41.

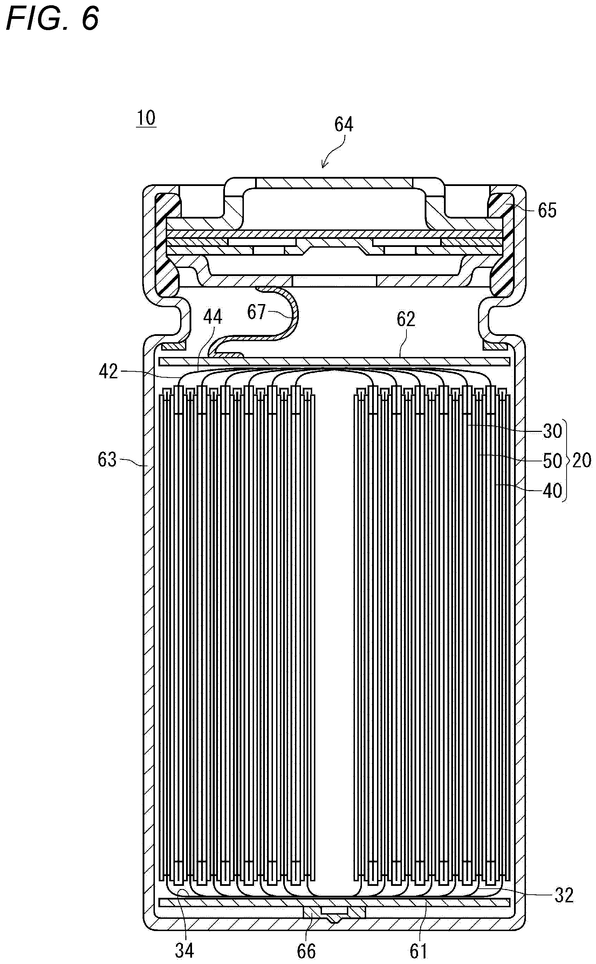

As shown in FIG. 6, the power storage device 10 includes the wound body 20, negative electrode current collecting plate 61, positive electrode current collecting plate 62, non-aqueous electrolyte (not shown), a metal-made bottomed case 63 accommodating the wound body 20 and non-aqueous electrolyte, and a sealing plate 64 sealing the opening of the case 63. A gasket 65 is disposed at the peripheral edge portion of the sealing plate 64, and by crimping the opening end of the case 63 to the gasket 65, the inside of the case 63 is sealed.

The non-aqueous electrolyte has lithium ion conductivity. The non-aqueous electrolyte includes a lithium salt and a non-aqueous solvent that dissolves the lithium salt.

The negative electrode current collector exposed portion 32 is in contact with the negative electrode current collecting plate 61 where it faces the end face of the wound body 20. The negative electrode current collecting plate 61 is welded to the inner track side of the negative electrode current collector exposed portion 32 through the negative electrode current collecting tab 34 extending from the outermost periphery of the negative electrode current collector exposed portion 32. The negative electrode current collecting plate 61 is welded to a welding member 66 provided at the inner bottom face in the case 63. Thus, the case 63 functions as an external negative electrode terminal.

Meanwhile, the positive electrode current collector exposed portion 42 is in contact with the positive electrode current collecting plate 62 where it faces the end face of the wound body 20. The positive electrode current collecting plate 62 is welded to the inner track side of the positive electrode current collector exposed portion 42 through the positive electrode current collecting tab 44 extending from the outermost periphery of the positive electrode current collector exposed portion 42. The other end of the current collecting lead 67 is connected to the inside of the sealing plate 64, while one end thereof is connected to the positive electrode current collecting plate 62. Thus, the sealing plate 64 functions as an external positive electrode terminal.

### « Embodiment 2 »

Embodiment 2 of the present disclosure is described. A power storage device 10 of this embodiment is different from the above-described Embodiment 1 in terms of the configuration of the negative electrode 30 or the positive electrode 40 (hereinafter, simply referred to as "electrode"). In the following, the points differing from the above-described Embodiment 1 are mainly described. In the description below, the negative electrode current collector 31 or positive electrode current collector 41 is simply referred to as "current collector", the negative electrode current collecting tab 34 or positive electrode current collecting tab 44 are simply referred to as " current collecting tab", and the negative electrode wide portion 35 or positive electrode wide portion 45 are simply referred to as "wide portion".

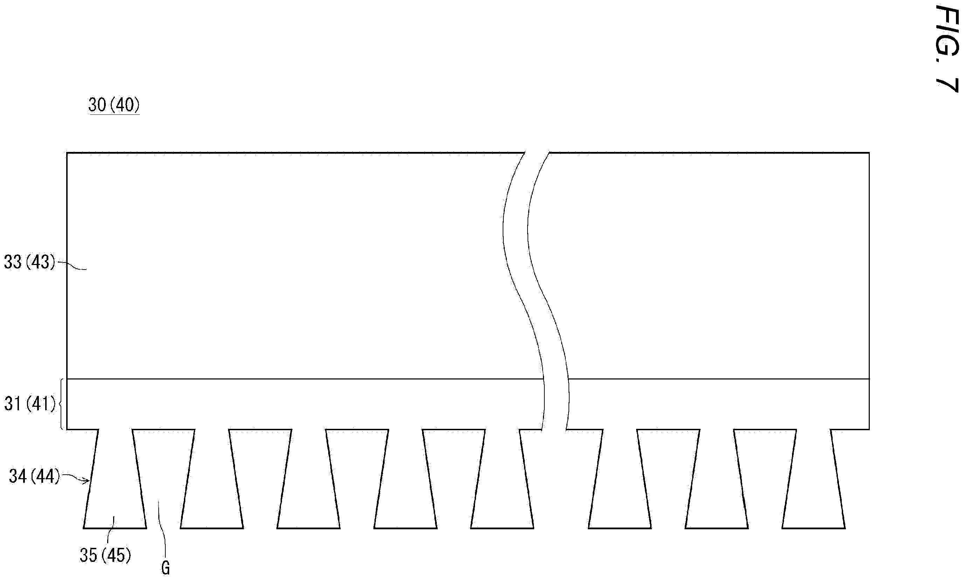

As shown in FIG. 7, a current collector 31 (41) of the electrode 30 (40) includes a plurality of current collecting tabs 34 (44) disposed at an equal interval along its longitudinal direction. The plurality of current collecting tabs 34 (44) are disposed at an equal interval from the inner track side end portion to the outer track side end portion of the current collector 31 (41). The current collecting tabs 34 (44) each has a wide portion 35 (45) disposed at its distal end portion. The wide portion 35 (45) is continuously widened toward the distal end portion side from the proximal end portion side of the current collecting tab 34 (44). When the current collector 31 (41) is unfolded, the shape of the current collecting tab 34 (44) matches the shape of gap G of two adjacent current collecting tabs 34 (44). This configuration allows for efficient use of materials, and two sheets of electrode 30 (40) can be made out of one metal sheet.

### « Embodiment 3 »

Embodiment 3 of the present disclosure is described. A power storage device 10 of this embodiment is different from the above-described Embodiment 1 in terms of the electrode 30 (40) configuration. In the following, the points differing from the above-described Embodiment 1 are mainly described.

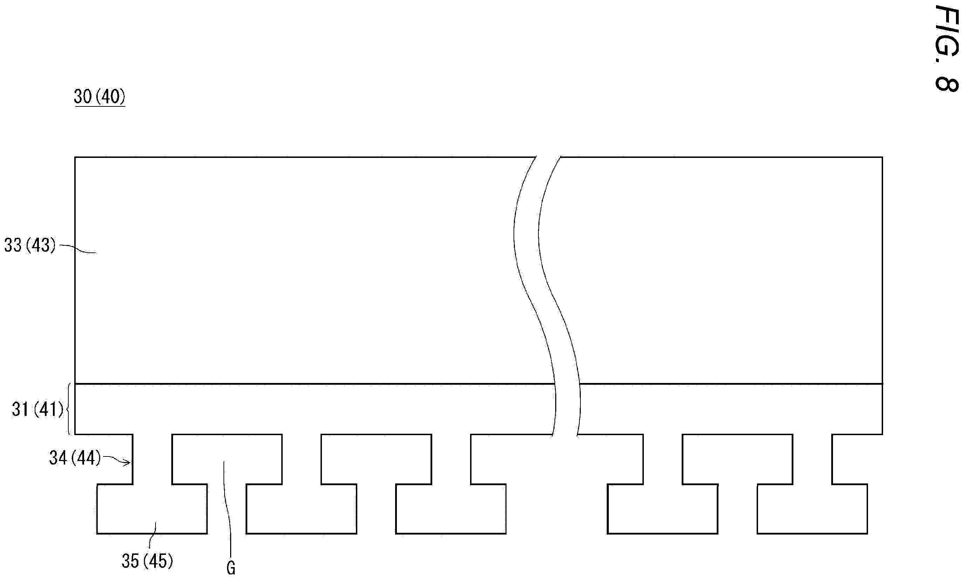

As shown in FIG. 8, a current collector 31 (41) of the electrode 30 (40) includes a plurality of current collecting tabs 34 (44) disposed at an equal interval along its longitudinal direction. The plurality of current collecting tabs 34 (44) are disposed at an equal interval from the inner track side end portion to the outer track side end portion of the current collector 31(41). The current collecting tab 34 (44) has a wide portion 35 (45) disposed at its distal end portion. The wide portion 35 (45) is widened stepwise toward the distal end portion side from the proximal end portion side of the current collecting tab 34 (44). When the current collector 31 (41) is unfolded, the shape of the current collecting tab 34(44) matches the shape of gap G of two adjacent current collecting tabs 34 (44). This configuration allows for efficient use of materials, and two sheets of electrode 30 (40) can be made out of one metal sheet.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### Industrial Applicability

The present disclosure can be applied to a power storage device.

### Description of Reference Numerals

10: power storage device
20: wound body
   30: negative electrode (first electrode)
      31: negative electrode current collector (first current collector)
         32: negative electrode current collector exposed portion
      33: negative electrode active material layer (first active material layer)
      34: negative electrode current collecting tab (first tab)
         35: negative electrode wide portion (first wide portion)
   40: positive electrode (second electrode)
      41: positive electrode current collector (second current collector)
         42: positive electrode current collector exposed portion
      43: positive electrode active material layer (second active material layer)
      44: positive electrode current collecting tab (second tab)
         45: positive electrode wide portion (second wide portion)
   50: separator
61: negative electrode current collecting plate (first current collecting plate)
62: positive electrode current collecting plate (second current collecting plate)
63: case
64: sealing plate
65: gasket
66: welding member
67: current collecting lead
G: gap

## Claims

1. A power storage device comprising a first electrode having a strip first current collector and a first active material layer carried on the first current collector,
a second electrode having a strip second current collector and a second active material layer carried on the second current collector, and
a separator interposed between the first electrode and the second electrode, wherein
the first electrode, the second electrode, and the separator form a columnar wound body,
the first current collector has a plurality of first tabs electrically connected to one end along the longitudinal direction of the first current collector and extending radially inward of the wound body,
the first tab has a proximal end portion connected to the first current collector, and a first wide portion wider than the proximal end portion, and
the plurality of first tabs are overlapped and welded to each other at their respective first wide portions.

2. The power storage device of claim 1, wherein the first wide portion is disposed at a distal end portion of the first tab.

3. The power storage device of claim 2, wherein when the first current collector is unfolded, the shape of the first tab matches the shape of gaps between the two adjacent first tabs.

4. The power storage device of any one of claims 1 to 3, wherein the first wide portion is a portion continuously widened toward the distal end portion side from the proximal end portion side of the first tab.

5. The power storage device of any one of claims 1 to 3, wherein the first wide portion is a portion widened stepwise toward a distal end portion side from the proximal end portion side of the first tab.

6. The power storage device of any one of claims 1 to 5, further comprising a first current collecting plate welded to the plurality of first tabs and electrically connected to the first current collector.

7. The power storage device of any one of claims 1 to 6, wherein the first wide portion is extended toward both sides in the width direction of the first tab.

8. The power storage device of any one of claims 1 to 7, wherein the plurality of first tabs extend from positions on straight lines radially extending and different from each other, seeing the end face of the wound body in a winding axis direction.
